Europäisches Patentamt

European Patent Office

Office européen des brevets

(19)

(11) Publication number : **0 636 992 A1**

(12) **EUROPEAN PATENT APPLICATION**

(21) Application number : **94305076.5**

(22) Date of filing : **11.07.94**

(51) Int. Cl.$^6$ : **G06F 15/80**

(30) Priority : **14.07.93 JP 174070/93**

(43) Date of publication of application :
**01.02.95 Bulletin 95/05**

(84) Designated Contracting States :
**DE FR GB NL**

(71) Applicant : **MATSUSHITA ELECTRIC
INDUSTRIAL CO., LTD.
1006, Oaza Kadoma
Kadoma-shi, Osaka-fu, 571 (JP)**

(72) Inventor : **Suzuki, Hidekazu
469-1, Tsutsui-cho
Yamatokoriyama-shi, Nara-ken, 639-11 (JP)**

Inventor : **Kubota, Masashi
2-18-23, Tsukushigaoka,
kita-ku
Kobe-shi, Hyogo-ken, 651-12 (JP)**
Inventor : **Nakai, Seiji
6-5-30, Tsurumi,
Tsurumi-ku
Osaka-shi, Osaka-fu, 538 (JP)**
Inventor : **Nishio, Toshiron
1-89-11, Higashifunabashi
Hirakata-shi, Osaka-fu, 573 (JP)**
Inventor : **Setoh, Koji
Syoun-ryo 511, 2-26-3,
Yakumokitamachi
Moriguchi-shi, Osaka-fu, 570 (JP)**

(74) Representative : **Crawford, Andrew Birkby et al
A.A. THORNTON & CO.
Northumberland House
303-306 High Holborn
London WC1V 7LE (GB)**

(54) **Pipeline operator.**

(57)    A start bit for setting again a command or a coefficient is generated on the basis of a reference signal indicating a beginning of data, and is supplied into n stages of operators while delaying by a specific period in a delay, so that the command or the coefficient stored in the register may be set individually for the n stages of operators.

Fig. 1

EP 0 636 992 A1

## BACKGROUND OF THE INVENTION

### 1. Field of the Invention

The present invention relates to a pipeline operator used in microprocessor, digital signal processor or the like.

### 2. Description of the Prior Art

A conventional pipeline operator is described below. Hereinafter, those describing a command or a coefficient for indicating an action to an operator are called download data, and the operation for transferring and setting the download data to the operator is called downloading.

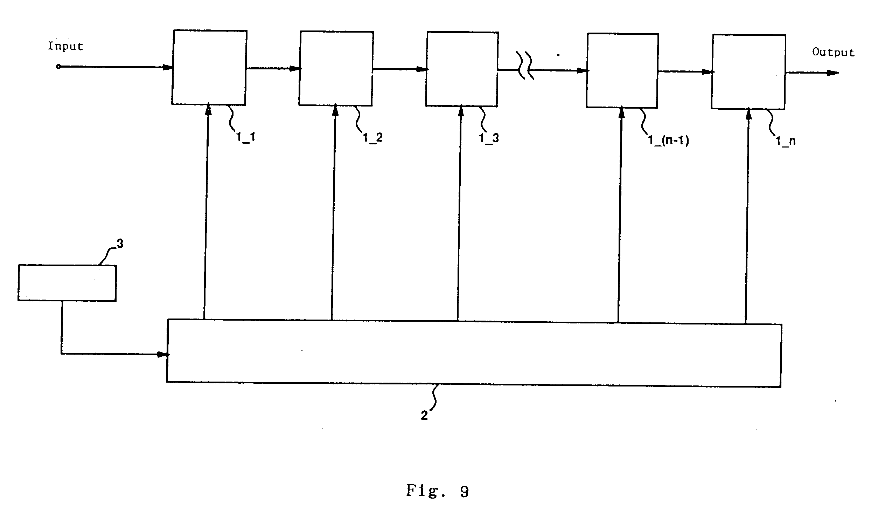

Fig. 9 is a structural diagram of the conventional pipeline operator. In Fig. 9, reference numerals 1_1 to 1_n denotes operators in n stages (n being a natural number) for performing an operation of input data in pipeline system. The operators are intended to perform the operation of data entered according to a content of the download data describing the command or the coefficient. Reference numeral 2 denotes a memory, which stores the download data describing commands and coefficients of the operators 1_1 to 1_n. Reference numeral 3 denotes an address generator, which generates an address for downloading the download data to the operators 1_1 to 1_n.

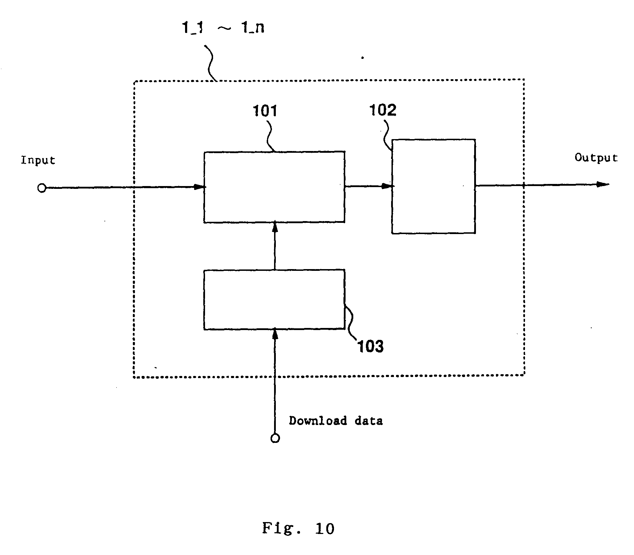

An internal constitution of the operators 1_1 to 1_n is shown in Fig. 10. In Fig. 10, reference numeral 101 denotes a operator main body, which is connected to a preceding operator, and perform the operation of the input data. Reference numeral 102 denotes a pipeline register, which is connected to the operator main body 101, and temporarily stores data after performing the operation. Reference numeral 103 denotes an internal register, which is connected to the operator main body 101, and stores the download data downloaded from the memory 2, and the operator main body 101 performs a specified operation by referring to the internal register 103.

In thus constituted pipeline operator, operation is described below. In the first place, using the address generated in the address generator 3, the download data describing the content to be performed the operation by the operators 1_1 to 1_n is read out of the memory 2, and downloaded in batch into the internal register 103 of all the operators 1_1 to 1_n. At the same time, the download data is fed into a first stage operator 1_1, and is performed the operation in the operator 1_1. Consequently, one clock later, the result of performing the operation in the first stage operator 1_1 is transferred into a second stage operator 1_2, and is performed the operation in the second stage operator 1_2. Generally speaking, at a certain clock timing, the operation is performed at a k-th stage operator 1_k (1<k<n, k being a natural number), and the result is transferred at a next clock timing to a (k+1)-th stage operator 1_(k+1), and performed the operation. Such processing is repeated from the first stage operator 1_1 to an n-th stage operator 1_n, thereby obtaining a final result of performing the operation.

Suppose, herein, to download the download data newly into the operators 1_1 to 1_n, and change the content of performing the operation in the operators. More specifically, assume to download the download data newly every time when m pieces of data (m being a natural number) are performed the operation in the operators 1_1 to 1_n. In the prior art in Fig. 9, the download data is downloaded in batch from the memory into all the operators 1_1 to 1_n. After the data to be performed the operation by first downloading is performed the operation at a final stage operator 1_n and is put out, if second downloading is effected, from the moment of the second downloading, n pieces of data sent out from the operator 1_n are broken, and correct result of the operation cannot be obtained. That is, of m pieces of operation results after the second downloading, first n pieces are invalid, and correct operation results are only (m-n) pieces, and as a number n of stages of the operators becomes larger, a number of pieces of data of the correct operation results decreases.

## SUMMARY OF THE INVENTION

It is hence a primary object of the invention to present a pipeline operator capable of obtaining correct operation results continuously without destruction of data at a time of re-downloading.

To achieve the object, the invention provides a pipeline operator comprising: first to n-th stages of operating means (n being natural number equal to or larger than 2) connected in pipeline construction for performing an operation according to commands or coefficients, storing means for storing the commands or the coefficients to be transferred to the first to n-th stages of operating means, and control means for controlling a timing for transferring the commands or the coefficients from the storing means to the first to n-th stages of operating means.

The control means controls the timing such that, downloading is effected sequentially and individually from the first to n-th stages of operating means. Therefore data is not destroyed when downloading again, so that correct results of performing the operation may be obtained.

## BRIEF DESCRIPTION OF THE DRAWINGS

Fig. 1 is a block diagram of a pipeline operator in a first embodiment of the invention.

Fig. 2 is a block diagram showing an internal constitution of an operator of the invention.

Fig. 3 is a timing chart showing an operation in the first embodiment of the invention.

Fig. 4 is a block diagram of a pipeline operator in a second embodiment of the invention.

Fig. 5 is a timing chart showing an operation of the second embodiment of the invention.

Fig. 6 is a block diagram of a pipeline operator in a third embodiment of the invention.

Fig. 7 is a block diagram of a pipeline operator in a fourth embodiment of the invention.

Fig. 8 is a timing chart showing an operation of the fourth embodiment of the invention.

Fig. 9 is a block diagram of a pipeline operator in a prior art.

Fig. 10 is a block diagram showing an internal constitution of an operator of the prior art.

## DESCRIPTION OF THE PREFERRED EMBODIMENTS

Referring to the drawings, embodiments of pipeline operators of the invention are described in detail below.

### Embodiment 1

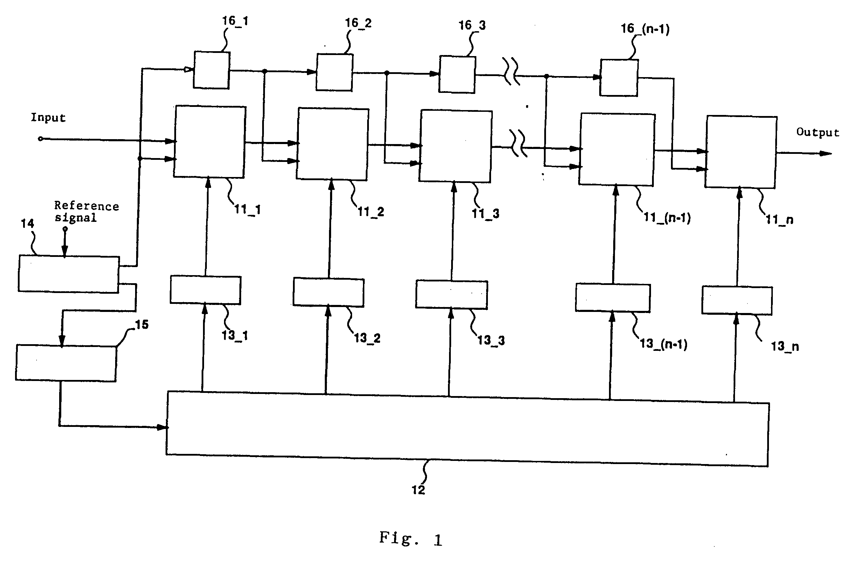

A first embodiment of the invention is described in the first place. Fig. 1 is a block diagram of a pipeline operator in the first embodiment of the invention. In Fig. 1, reference numerals 11_1 to 11_n denote operators in n stages, which are connected in pipeline construction, and perform an operation of input data in pipeline system. Reference numeral 12 denotes a memory, which stores download data describing a content of the operation to be done in the operators 11_1 to 11_n. Reference numerals 13_1 to 13_n denotes registers, which are connected to the operators 11_1 to 11_n and the memory 12, and temporarily store the download data sent from the memory 12.

Reference numeral 14 denotes a start bit generator, which is connected to a first stage operator 11_1 out of the operators 11_1 to 11_n, and an address generator 15 described below, and generates a start bit to be used as a flag for re-downloading for changing the content of the operation in the operators 11_1 to 11_n, on the basis of a reference signal showing start of input data (for example, frame pulse or horizontal synchronizing. signal in video signal).

The address generator 15 is connected to the start bit generator 14 and the memory 12, and generates a reading address of the memory 12 on the basis of information of the start bit to control the output of download data from the memory 12.

Reference numerals 16_1 to 16_(n-1) denotes first delays in n-1 stages connected in pipeline construction, a first delay 16_1 is connected to the start bit generator 14. Each of the first delays 16_1 to 16_(n-1) is connected to each of the second stage operator 11_2 to the n-th stage operator 11_n, and supplies the start bit delivered from the start bit generator 14 into each of the second stage operator 11_2 to the n-th stage operator 11_n by delaying one clock timing each.

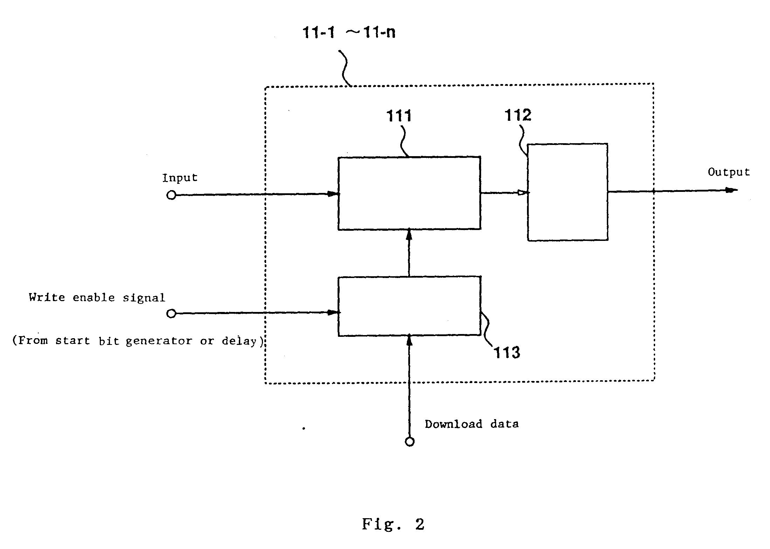

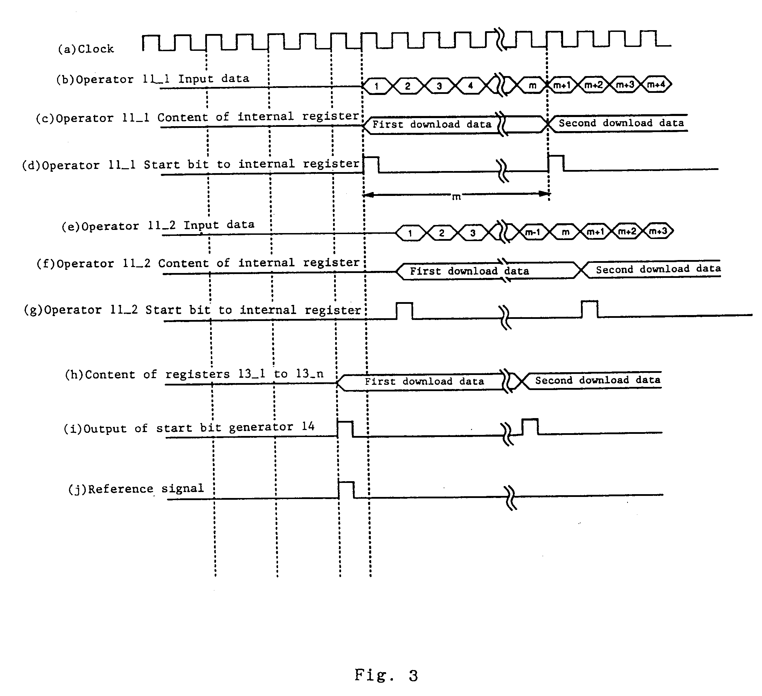

Internal constitutions of the operators 11_1 to 11_n are identical, and Fig. 2 shows an internal constitution of each of the operators. In Fig. 2, reference numeral 111 denotes an operator main body, which is connected to a preceding operator of or an input port, and performs the operation of the input data by arithmetic operation (for example, addition or subtraction), logic operation, or the like. Reference numeral 112 denotes a pipeline register, which is connected to the operator main body 111 and a succeeding operator, and temporarily saves the data performed the operation of by the operator main body 111. Reference numeral 113 denotes an internal register, which is connected to the registers 13_1 to 13_n shown in Fig. 1 and the operator main body 111. This internal register 113 is designed to store the download data inside the operators 11_1 to 11_n, and the operator main body 111 accesses the internal register 113, and performs the operation of the data entered in the operator main body 111 on the basis of a content of the download data in the internal register 113. For example, when the download data stored in the internal register 113 is an addition command, the operator main body 111 processes an addition to the input data, and when the download data stored in the internal register 113 is a bit inversion command, the operator main body 111 processes bit inversion. A timing chart of the first embodiment is shown in Fig. 3.

In thus constituted pipeline operator of the first embodiment, an operation is described below while referring to Figs. 1, 2 and 3. Suppose, for example, every time when m pieces (m being a natural number) of the input data are performed the operation in the operators 11_1 to 11_n, the content of the operation in the operators is changed by redownloading in the operators.

First, on the basis of a reference signal (j in Fig. 3) showing the start of the input data, the start bit (i in Fig. 3) is generated for setting up a bit in every m clocks in the start bit generator 14. When the start bit generated in the start bit generator 14 is supplied (d in Fig. 3), an address is generated in the address generator 15, and is sent out to the memory 12. The memory 12 reads out the download data instructed by the address generated by the address generator 15, and sends out the download data to the registers 13_1 to 13_n, while the registers 13_1 to 13_n store the download data temporarily, and send out the download data to the operators 11_1 to 11_n (h in Fig. 3).

Of m pieces of data in the first stage of operator 11_1, a first data process is described below. The start bit generated by the start bit generator 14 is transferred to the internal register 113 of the first stage of operator 11_1 and a first delay 16_1 of a first stage. In the first stage of operator 11_1, when the start bit is supplied to the internal register 113 (d in Fig. 3), the internal register 113 is set in write enable state, and the internal register 113 takes in first download data from a register 13_1 (c in Fig. 3), and first data out of m pieces (b in Fig. 3) is performed the operation in the operator main body 111 according to the content described in the register 13_1, and the result is transferred to the pipeline register 112.

Besides, the start bit generator 14 adjusts an output timing so that a timing of the internal register 113 of the operator 11_1 of taking in the download data from the register 13_1, that is, the timing of the start bit being supplied into the internal register 113 may be one clock after the download data is transferred to the register 13_1.

Explained next is a processing of the first data out of m pieces of data in the second stage of operator 11_2. At a next clock timing of a clock timing of processing of the first data out of m pieces in the first stage operator, a start bit, or one clock later than the start bit supplied to the internal register of the first stage of operator 11_1 by the first delay 16_1 of the first stage is supplied to the internal register 113 of the second stage of operator 11_2 (g in Fig. 3). The internal register 113 takes in the first download data stored in the register 13_2 (f in Fig. 3), and at the same time the first data performed the operation by the first stage of operator is transferred to the second stage of operator 11_2 (e in Fig. 3) In the second stage of operator 11_2, the first data of m pieces is performed the operation in the operator main body 111, and a result of performing the operation is transferred to the pipeline register 112. At this time, in the first stage operator 11_1, performing the operation of the second data of m pieces is executed the same as the first data.

Thereafter, in a third stage to n-th stage of operators 11_3 to 11_n, simultaneously with transfer of the input data in each operator, the internal register 113 takes in the first download data from the registers 13_3 to 13_n, and performs the operation according to the content. Thus, the download data is individually downloaded into the internal register 113 of the operators 11_1 to 11_n, by a write enable signal of the start bit.

To change the content of performing the operation in the operators 11_1 to 11_n, a second downloading is described below. After m-th clock after counting from the start of the input data, the start bit generator 14 generates a start bit which is a flag of re-downloading, and the start bit is transferred to the first stage of operator 11_1 and the address generator 15. The address generator 15, receiving the start bit, generates the address, and transfers the second download data of the address in batch from the memory 12 to the registers 13_1 to 13_n. At the same timing as when the m-th data (final data of the first processing) after counting from the start of data which is performed the operation by the first stage of operator 11_1 is transferred to the second stage of operator 11_2 and performed the operation according to the first download data, the operator 11_1 performs the operation of the (m+1)-th data (the first data of second processing) according to the second download data. That is, at this timing, simultaneously, the input data is performed the operation in the first stage of operator 11_1 according to the second download data, and the second stage to n-th stage of operators 11_2 to 11_n performs the operation according to the first download data. At this time, the data is not destroyed.

Thereafter, operation data is transferred in every clock into a third stage to the n-th stage of operators 11_3 to 11_n, and at the same time the second download data is sequentially downloaded by the start bit in every clock into the internal register of the operators, and therefore the data is not destroyed even if the download data is changed, so that correct results of performing the operation are produced.

In the third to n-th downloading, the operation of the pipeline operator is exactly same as in the first and second downloading.

Thus, according to the first embodiment, correct results of performing the operation are obtained continuously, without destruction of data, even if changing the download data.

Embodiment 2

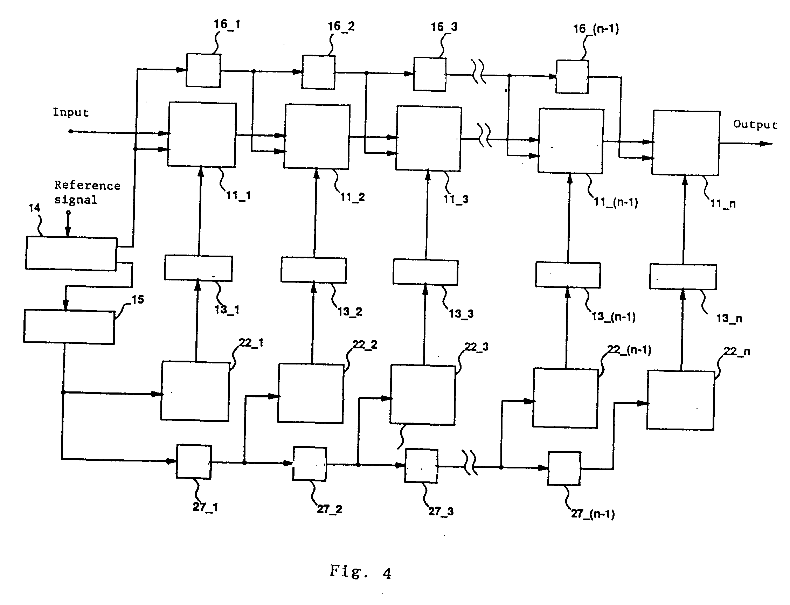

A second embodiment is described next. Fig. 4 is a block diagram of a pipeline operator in the second embodiment of the invention. The constitution of the second embodiment is first compared with the first embodiment in Fig. 1. In Fig. 4, components same in construction and operation as in the first embodiment indicate the same reference numbers as in Fig. 1.

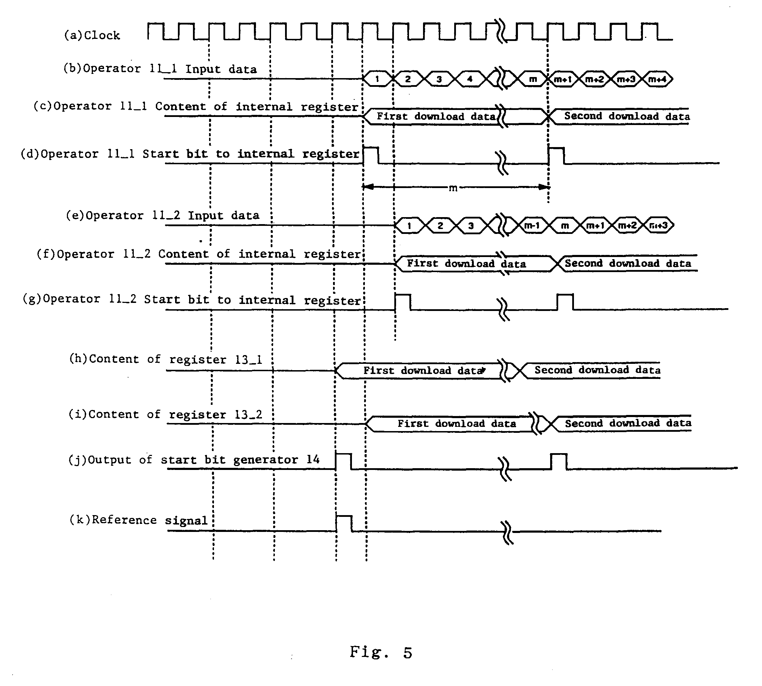

Reference numerals 22_1 to 22_n denote n memories, and a memory 22_1 is connected to the address generator 15, and memories 22_2 to 22_n are respectively connected to second delays 27_1 to 27_(n-1) of n-1 stages mentioned below. Reference numerals 27_1 to 27_(n-1) denote the second delays of n-1 stages, which are connected to the address generator 15 and the memories 22_1 to 22_n, and supply the address produced from the address generator 15 into the memories 22_2 to 22_n while delaying by one clock timing each. A timing chart of the second embodiment is shown in Fig. 5.

In thus constituted pipeline operator of the second embodiment, the operation is described below by reference to Figs. 4, 5 and 2 while comparing with the first embodiment. On the basis of the reference signal (k in Fig. 5), the start bit is generated by the start bit generator 14 (j in Fig. 5), and the start bit is supplied to the address generator 15. So far, the operation in the second embodiment is the same as in the first embodiment. In the second embodiment, the address generator 15 supplies the address to the memories 22_1 to 22_n while delaying by one clock timing each by the second delays 27_1 to 27_(n-1) to the memories 22_1 to 22_n. By contrast to the first embodiment in which the download data was transferred in batch from the memory 12 into the registers 13_1 to 13_n, in the second embodiment, it is transferred from the memories 22_1 to 22_n to the registers 13_1 to 13_n while delaying by one clock timing each (h and i in Fig. 5). The internal register 113 of the operators 11_1 to 11_n receives the start bit (write enable signal) delayed by one clock timing each by first delays 16_1 to 16_(n-1), and finally downloading is effected in the internal register 113 of the operators 11_1 to 11_n by one clock timing later each.

In the first embodiment, because of downloading in batch from the memory 12 to the registers 13_1 to 13_n in Fig. 1, next download cannot be started until the download from the registers 13_1 to 13_n is completed in the internal register 113 of the operators 11_1 to 11_n, and hence it is impossible to perform the operation according to three types of download data simultaneously in the operators of 11_1 to 11_n. That is, in the first embodiment, if attempted to perform the operation by one download data, the number of m pieces of data must be greater than the number n of stages of the operators for composing the pipeline.

In the second embodiment, since the download data is transferred from the memories 22_1 to 22_n to the registers 13_1 to 13_n while delayed by one clock timing each, if m<n, it is possible to perform the operation correctly in the operators 11_1 to 11_n.

In the first embodiment, to extend the number of stages of the operators to n+1 stages, it is needed to add one more operator, delay and register, but the memory 12 must be also changed to a new memory capable of storing n+1 commands in one address.

By contrast, in the second embodiment, to extend the number of stages of the operators to n+1 stages, it is enough to add one more operator, first delay, second delay, register and memory, so that it is easy to extend.

According to the second embodiment, in addition to effects of the first embodiment, if the number of m pieces of data to be processed by one downloading is smaller than the number n of stages of the operators, correct results of performing the operation can be obtained without destruction of data. Even if the number of stages of the operators increases, it is enough to add the operator, the first delay, the second delay, the register and the memory by the number of increase of stages, so that extendability is high.

Embodiment 3

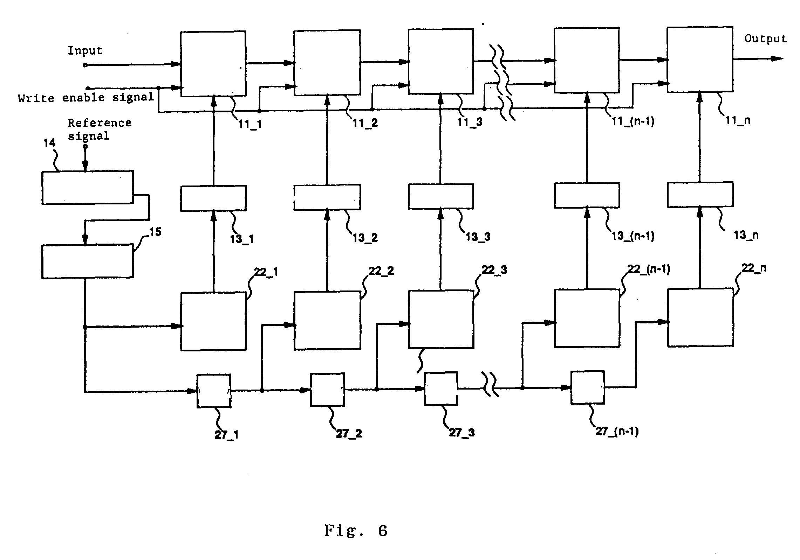

A third embodiment is described. Fig. 6 is a block diagram of the third embodiment. The same constituent elements as in the first embodiment and the second embodiment are identified with the same reference numbers as in Fig. 1 and Fig. 4. A constitution of the third embodiment is described in comparison with Fig. 4 in the second embodiment. In Fig in the second embodiment, the start bit generator 14 is connected to the operator 11_1, but in the third embodiment, the start bit generator 14 is not connected to the operator 11_1. Besides, in Fig. 4 in the second embodiment, the start bit delivered from the start bit generator 14 (a write enable signal of the internal register 113) is supplied to the operators 11_1 to 11_n through the first delays 16_1 to 16_(n-1), but in the third embodiment, the start bit generator 14 and the operators 11_1 to 11_n are not connected.

In thus constituted pipeline operator of the third embodiment, an operation is described below while referring to Fig. 6, in comparison with the second embodiment. The download data is transferred from the memories 22_1 to 22_n into the registers 13_1 to 13_n while delaying by one clock timing each. So far it is the same as in the second embodiment. In the third embodiment, the write enable signal of the internal register 113 of the operators 11_1 to 11_n is always set in write enable state. Then, the contents of the registers 13_1 to 13_n are downloaded into the internal register 113 of the operators 11_1 to 11_n by one clock timing later each, so that the same effects as in the second embodiment may be obtained. For the extendability in the case of increasing the number of stages of the operators, it is the same as in the second embodiment.

Embodiment 4

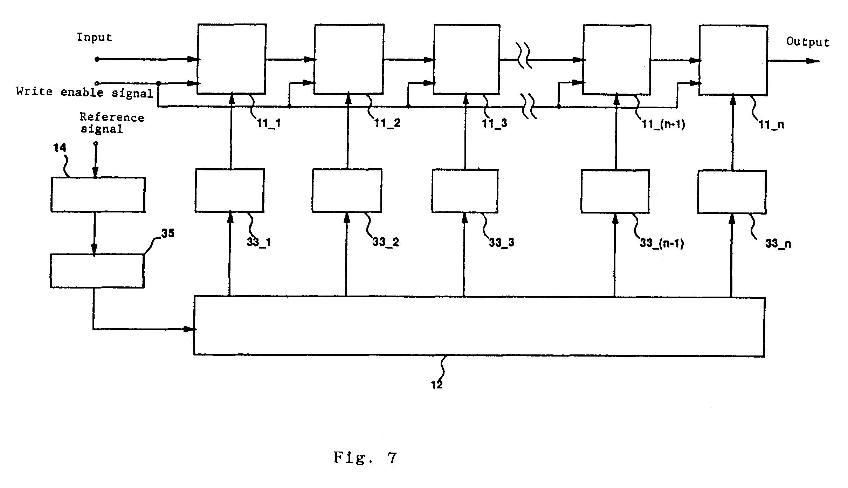

A fourth embodiment is described. Fig. 7 is a block diagram of the fourth embodiment of the invention. First, a constitution of the fourth embodiment is described in comparison with Fig. 1 in the first embodiment. In Fig. 7, the same constituent elements as in the first embodiment are identified with the same reference numerals as in Fig. 1. Reference numeral 35 denotes an address generator which operates differently from the address generator 15 in Fig. 1, and it repeats transfer of the download data into delays 33_1 to 33_n in every clock.

Reference numerals 33_1 to 33_n denote n delays differing in delay time, replacing the n registers 13_1 to 13_n in Fig. 1. Of the n delays 33_1 to 33_n in Fig. 7, a delay time $D(k)$ of a k-th delay 33_k is expressed as

$$D(k) = k \text{ (clock)} \quad (1)$$

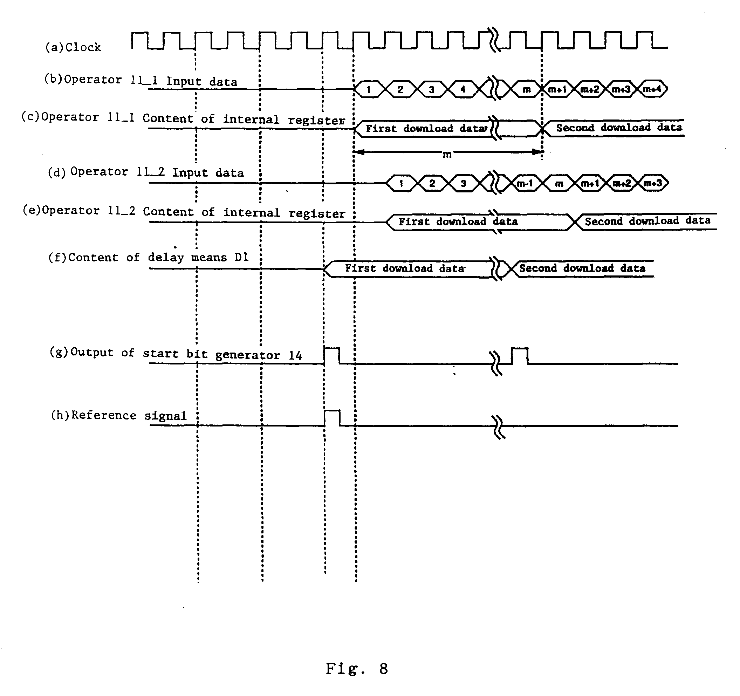

A timing chart showing an operation of the fourth embodiment is shown in Fig. 8.

In thus constituted pipeline operator of the fourth embodiment, the operation is described below with reference to Fig. 7 and Fig. 8, while comparing with the first embodiment. From the reference signal, the start bit is generated by the start bit generator 14, and the start bit is supplied into the address generator 35. So far, it is the same as in the first embodiment. In the fourth embodiment, the start bit is not supplied to the operators 11_1 to 11_n, which is a major different point from the first and the second embodiments.

The address generator 35 receives the start bit from the start bit generator 14, and generates the address, and the download data of the address corresponding to the memory 12 is transferred in batch to the n delays 33_1 to 33_n. The address generator 35 repeats to transfer the download data in every clock. Since the delay time of the n delays 33_1 to 33_n is given in formula (1), the internal register 113 of the operators 11_1 to 11_n is always kept in write enable state regardless of the start bit, so as to be downloaded into the internal register 113 of the operators 11_1 to 11_n in Fig. 7 by one clock later each. Therefore, when the download data is changed, the data is not destroyed. Moreover, the k-th delay 33_k can store up to k kinds of the download data according to formula (1), and therefore if the number of m pieces of the data to be performed the operation by one downloading is smaller than the number n of stages of the operators, correct results of performing the operation can be obtained without destruction of the data, which is the same effect as in the second embodiment.

Thus, according to the fourth embodiment, correct results of performing the operation can be obtained even when the download data is changed without destruction of the data.

In the fourth embodiment, the delay time of the delay 33_k is given in formula (1), but the same effect is obtained in the formula of

$$D(k) = k - 1 \text{ (clock)} \quad (2)$$

Incidentally, in the four foregoing embodiments, the input into the operators 11_1 to 11_n was one, but the same effects are obtained by plural inputs.

In these four embodiments, the entire constitution may be realized either by using individual ICs for constituent elements of the operators, the registers, the memories, the delays, and the others, or by incorporating all of these constituent elements into one IC (Integrated Circuit) or LSI (Large Scale Integration).

## Claims

1. A pipeline operator comprising:
    first to n-th stages of operating means (n being natural number equal to or larger than 2) connected in pipeline construction for performing an operation according to commands or coefficients;

storing means for storing the commands or the coefficients to be transferred to the first to n-th stages of operating means; and
    control means for controlling a timing for transferring the commands or the coefficients from the storing means to the first to n-th stages of operating means.

2. A pipeline operator comprising:
    first to n-th stages of operating means (n being natural number equal to or larger than 3) connected in pipeline construction for performing an operation according to commands or coefficients;
    storing means for storing the commands or the coefficients to be transferred to the first to n-th stages of operating means;
    first to n-th registers for temporarily storing the commands or the coefficients delivered from the storing means, and for setting the commands and the coefficients respectively for individual the first to n-th stages of operating means;
    start bit generating means connected to the first stage of operating means for generating a start bit to set again the commands or the coefficients to the first to n-th stages of operating means;
    n-1 stages of delay means connected to the second to n-th stages of operating means for delaying the start bit sequentially each by a specific period and for transferring the delayed start bit sequentially to the second to n-th stages of operating means; and
    address generating means responsive to the start bit generated by the start bit generating means for generating a read address of the storing means, command or coefficient read from the storing means at the read address being transferred to the first to n-th registers.

3. A pipeline operator comprising:
    first to n-th stages of operating means (n being natural number equal to or larger than 3) connected in pipeline construction for performing an operation according to commands or coefficients;
    first to n-th storing means for storing the commands or the coefficients to be transferred to the first to n-th operating means, respectively;
    first to n-th registers for temporarily storing the commands or the coefficients delivered from the first to n-th storing means, and for setting the commands and the coefficients respectively to the first to n-th operating means;
    start bit generating means connected to the first stage of operating means for generating a start bit to set again the commands or the coefficients to the first to n-th stages of operating means;

n-1 stages of first delay means connected to the second to n-th stages of operating means for delaying the start bit sequentially each by a specific period and for transferring the delayed start bit sequentially to the second to n-th stages of operating means;

address generating means responsive to the start bit generated by the start bit generating means for generating a read address of the first storing means, command or coefficient read from the first storing means at the read address being transferred to the first register; and

n-1 stages of second delay means connected to the second to n-th stages of storing means for delaying the read address sequentially by a specific period and for transferring the delayed read address sequentially to the second to n-th stages of storing means, commands or coefficient read from the second to n-th storing means being transferred to the second to n-th registers.

4. A pipeline operator comprising:

first to n-th stages of operating means (n being natural number equal to or larger than 3) connected in pipeline construction for performing an operation according to commands or coefficients;

first to n-th storing means for storing the commands or the coefficients to be transferred to the first to n-th operating means, respectively;

first to n-th registers for temporarily storing the commands or the coefficients delivered from the first to n-th storing means, and for setting the commands and the coefficients respectively to the first to n-th stages of operating means;

start bit generating means for generating a start bit to set again the commands or the coefficients to the first to n-th stages of operating means;

address generating means responsive to the start bit generated by the start bit generating means for generating a read address of the first storing means, command coefficient read from the first storing means at the read address being transferred to the first register; and

n-1 stages of delay means connected to the second to n-th stages of storing means for delaying the read address sequentially by a specific period and for transferring the delayed read address sequentially to the second to n-th stages of storing means, commands or coefficients read from the second to n-th storing means being transferred to the second to n-th registers.

5. A pipeline operator comprising:

first to n-th stages of operating means (n being natural number equal to or larger than 2) connected in pipeline construction for performing an operaiton according to commands or coefficients;

storing means for storing the commands or the coefficients to be transferred to the first to n-th stages of operating means;

first to n-th delay means for delaying the commands or coefficients delivered from the storing means sequentially by a specific period and for setting the commands and the coefficients respectively to the first to n-th stages of operating means;

start bit generating means for generating a start bit to set again the commands or the coefficients to the first to n-th stages of operating means; and

address generating means responsive to the start bit generated by the start bit generating means for generating a read address of the storing means, command or coefficient read from the storing means at the read address being transferred to the first to n-th delay means.

EP 0 636 992 A1

Input

Output

Reference
signal

16_1  16_2  16_3  16_(n-1)

11_1  11_2  11_3  11_(n-1)  11_n

14

15

13_1  13_2  13_3  13_(n-1)  13_n

12

Fig. 1

Fig. 2

Fig. 3

Fig. 4

(a)Clock

(b)Operator 11_1 Input data

(c)Operator 11_1 Content of internal register

First download data     Second download data

(d)Operator 11_1 Start bit to internal register

m

(e)Operator 11_2 Input data

(f)Operator 11_2 Content of internal register

First download data     Second download data

(g)Operator 11_2 Start bit to internal register

(h)Content of register 13_1

First download data     Second download data

(i)Content of register 13_2

First download data     Second download data

(j)Output of start bit generator 14

(k)Reference signal

Fig. 5

Fig. 6

Fig. 7

Input

Output

Write enable signal

Reference
signal

14

35

11_1    11_2    11_3    11_(n-1)    11_n

33_1    33_2    33_3    33_(n-1)    33_n

12

EP 0 636 992 A1

14

EP 0 636 992 A1

Fig. 8

15

Fig. 9

Fig. 10

European Patent
Office

**EUROPEAN SEARCH REPORT**

Application Number

EP 94 30 5076

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 574 345 (KONESKY)<br>* the whole document * | 1-5 | G06F15/80 |
| Y | EP-A-0 246 911 (INMOS LTD.)<br>* abstract; column 34, line 1 - column 4, line 29; column 5, line 32 -column 6, line 56 * | 1-5 | |
| A | EP-A-0 200 569 (ADVANCED MICRO DEVICES)<br>* the whole document * | 1-5 | |
| A | EP-A-0 285 192 (N.V. PHILIPS' GLOEILAMPENFABRIEKEN)<br>* the whole document * | 1-5 | |
| A | US-A-5 179 714 (GRAYBILL)<br>* summary ; column 4, lines 45-54; column 5, lines 22-37 * | 2-5 | |
| | | | **TECHNICAL FIELDS SEARCHED (Int.Cl.6)**<br><br>G06F |

The present search report has been drawn up for all claims

| Place of search | Date of completion of the search | Examiner |
|---|---|---|
| THE HAGUE | 26 October 1994 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)